# EUROPEAN PATENT APPLICATION

(11) **EP 4 738 876 A1**
(43) Date of publication of application: **06.05.2026**
(21) Application number: 25212650.3
(22) Date of filing: 31.10.2025
(51) Int. Cl.: H04Q 1/02

(54) **COLOR CODED CABLING FOR A.I. DRIVEN OPTICAL NETWORKS**

(30) Priority: 05.11.2024 US 202418937168
(71) Applicant: Panduit Corp., Tinley Park, Illinois 60487 (US)
(72) Inventor: HUANG, Yu, Tinley Park, 60487 (US); KELLY, Brian L., Tinley Park, 60487 (US); HIBNER, Max W., Tinley Park, 60487 (US); WAGNER, Robert R., Tinley Park, 60487 (US); REID, Robert A., Tinley Park, 60487 (US); SEDOR, Thomas M., Tinley Park, 60487 (US)
(74) Representative: Roberts, Gwilym Vaughan

(57) **Abstract**

A structured cabling system has a plurality of leaf switch ports; a plurality of server node ports; and a plurality of patch cords, trunk cables, and patching components configured to follow a coherent color and labeling scheme to implement optical communication network topologies. Each port of the plurality of server node ports is grouped and assigned to a color depending on a node order or location on the rack such that the trail observed at a patch panel for the plurality of leaf switch ports follows a uniform vertical color pattern. The vertical pattern matching a desired logical network topology with the vertical pattern being easy to observe so a risk of misplacing during the installation is be reduced.

## Description

### FIELD

The present disclosure relates to passive elements used in the deployment of data center optical networks and, in particular, to methods and apparatus for efficient and scalable organization of optical fabrics for Artificial Intelligence (AI) data center networks.

### BACKGROUND

An optical interconnection assembly and method for the deployment and scaling of optical networks employing CLOS was introduced by Charles Clos around 1952. Spine-and-Leaf, a type of CLOS topology, is extensively used in data centers. A variant of CLOS topology used in AI networks named rail-optimized networks can further improve network performance by leveraging the high bandwidth and low-latency of internal scale-up networks of the compute nodes, such as NVLINK, to minimize hops, optical-to-electrical conversions across switches of network. Both topologies can become complex to deploy for large networks. Specifically, rail-optimized topology requires a specific interconnection mapping to optimize network performance. The apparatus and methods disclosed here facilitated deployment of the mentioned fabric topologies, enabling simpler installation, maintenance, and future scaling.

AI Machine Learning (AI/ML) systems can necessitate immense computing processing capacity, bandwidth, low latency, and especially low "tail-latency," to handle the processing of large foundational models during training or inference.

AI/ML systems use specialized networks. Typically, internal scale-up networks such as NVLINK, connect a relatively small number of GPUs, typically 8 to 72, with very high bandwidth electrical links. To expand out to larger number of GPUs, the optical backend network or scale-out network is used. The backend network typically utilizes Infiniband (IB), or Ethernet protocols. When the latter is used, the Ethernet protocol can include additional traffic management enhancements for optimizing network performance.

Currently, the back-end of most AI/ML systems relies on a large number of short-distance connections, typically using MPO multifiber connectors/adapters. The common network topologies for these systems are Spine/Leaf or rail-optimized fabrics, used for node-to-switch and switch-to-switch interconnections. Although traditional HPC topologies like Torus, Hypercube, Dragonfly, and Slim Fly are being explored, they are not yet widely adopted in AI/ML networks.

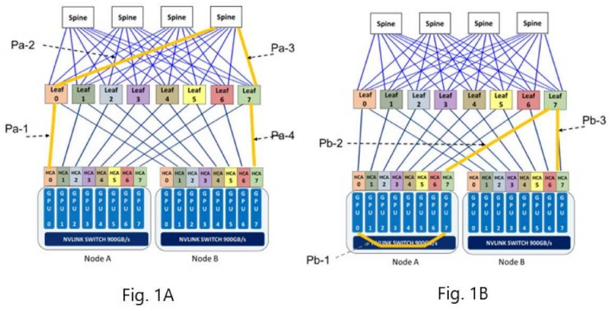

Rail-optimized fabrics improve network performance by leveraging the high-speed internal links within nodes (scale-up) to reduce the number of hops in the scale-out the network. Figs. 1A and 1B show an example where GPU 0 in Node A connects to GPU 7 in Node B through Leaf and Spine switches. Without rail optimization, communication between GPUs, such as GPU 1 in Node A and GPU 7 in Node B, would require multiple hops through various switches as shown in Fig. 1A. For example, one hop at Leaf 0 to connect paths Pa-1 to Pa-2, one more hop at one Spine switch to connect Pa-2 to Pa-3 and another one at Leaf 7 to connect Pa-3 to Pa-4. Each hop requires electrical-to-optical, optical-to-electrical conversion, FEC encoding/decoding and switch queuing, all of which add latency. Rail-optimized networks can reduce this latency when GPUs with similar numbers are connected to the same leaf switch. For example, GPU 0 can send data directly to GPU 7 within the same node using its internal high-bandwidth link, while communication between GPU 7 in Node A and GPU 7 in Node B requires only fewer hops as shown in Fig. 1B.

Deploying a rail-optimized network requires precise connection and cable mapping. Structured cabling using apparatus for labeling and coloring methods described in this disclosure provides an efficient way to organize the necessary connections and deploy the AI network for achieving optimal network performance. Additionally, the disclosed methods and apparatuses simplify the maintenance of the network and facilitates future scaling of the AI system.

### SUMMARY

A structured cabling system has a plurality of leaf switch ports; a plurality of server node ports; and a plurality of patch cords, trunk cables, and patching components configured to follow a coherent color and labeling scheme to implement optical communication network topologies. Each port of the plurality of server node ports is grouped and assigned to a color depending on a node order or location on the rack such that the trail observed at a patch panel for the plurality of leaf switch ports follows a uniform vertical color pattern. The vertical pattern matching a desired logical network topology with the vertical pattern being easy to observe so a risk of misplacing during the installation is be reduced.

### BRIEF DESCRIPTION OF THE DRAWINGS

Fig. 1A illustrates a rail-optimized topology to reduce communication latency in AI networks.
Fig. 1B also illustrates a rail-optimized topology to reduce communication latency in AI networks.
Fig. 2A shows a logical topology example of an AI system with 32 nodes.
Fig. 2B shows a physical representation using 4 nodes per rack and 4 Spine and 4 leaf switches.
Fig. 2C shows a physical representation using 2 nodes per rack, 8 Leaf and 4 spine switches.
Fig, 3 shows a typical AI deployment consisting of 32 nodes, 8 Leaf switches and 4 Spine switches distributed across eight compute racks.
Fig, 4 shows a complex labeling scheme in a small part of an AI network.
Fig, 5 shows an exemplary color scheme for AI system shown in Fig. 3.
Fig. 6 shows an example of the connectivity of trunks to the back of patch panel P-NL on the Leaf rack or cabinet.
Fig. 7 shows the connectivity of a patch panel the front of P-NL to the Leaf switching port using the proposed colored scheme.
Fig. 8 shows connectivity between Leaf and Spine switches through patch panel P-LS and the proposed colored scheme.
Fig. 9A shows a link organizer 300 with 8 slots.
Fig. 9B shows a link organizer (without 320) in its original shape and after being folded to facilitate deployment.
Fig. 9C shows link organizer (without 320) with installed cabled subunits 100 of a trunk 200.
Fig. 10 shows the exemplary color scheme for AI system shown in Fig. 5 using link organizers.
Fig. 11 shows the detailed connection from the node ports using patch cords 200-P1 to the patch panel P1 (color blue).
Fig. 12 shows the connectivity patch panel P-NL to the Leaf switching port using the proposed colored scheme (Fig. 8) with link organizers.
Fig. 13 shows the connectivity for multiple PODs using proposed colored scheme.
Fig. 14 shows the colored interconnections from Leaf to back of P-LS located in each Leaf rack.
Fig. 15 shows colored interconnections from each Leaf Rack, P-LS to Spine Racks P-S.

### DETAILED DESCRIPTION

Direct connections, commonly used in HPC and AI networks, often result in tangled cables, difficult maintenance, and limited scalability. In contrast, structured cabling, which separates trunks from patch cords using patch panels, offers a more organized, scalable solution for AI systems. As AI processing demands grow, structured cabling provides the flexibility needed for future upgrades. Despite its advantages, deploying structured cabling in complex topologies can still be challenging. To address this, we present a method using color-coded and simplified labeling to make cable identification easier, reducing the risk of misconnection.

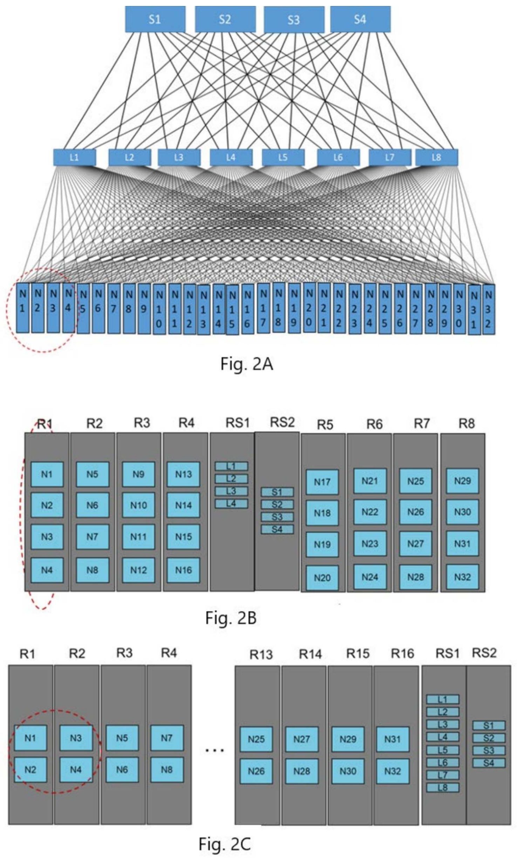

Figs. 2A-C illustrate a typical network topology and physical implementation of AI networks. The logical topology in Fig. 2A depicts logical topology for rail-optimized interconnections between nodes and leaf switches. Maintaining this logical topology is crucial to fully benefit from the performance gains of rail optimization. The physical deployment of a given topology can vary. Regarding air-cooled nodes, it is recommended to limit to 4 or fewer nodes per rack, whereas liquid-cooled nodes can support 16, 18, or more per rack. The number of required switches depends on their port count, which is determined by the capacity of the switch ASIC.

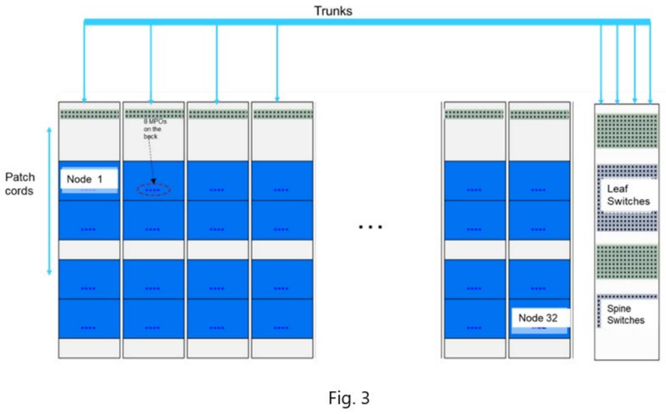

Fig. 3 illustrates a typical AI system with 32 nodes 8 Leaf and 4 Spine switches using structured cabling. Each node has 8 GPUs and are capable of connecting to the Leaf switches using 8 MPOs via patch panels located in each compute rack or cabinet. A panel at the top of each computer rack as shown in the example.

Patching zones, such as Fiber Adapter Panels, FAPs, or cassettes are also required in the network racks/cabinets to facilitate interconnection of the Leaf switches to Nodes and Spines. In this example, Leaf switches have 64 ports where nearly half of them need to be assigned to connect to the nodes (downlinks) and the rest to connect to the spines (uplinks).

Even though structured cabling facilitates deployment, it requires complex labeling of each connection and careful installation of them in the correct port of a patch panel.

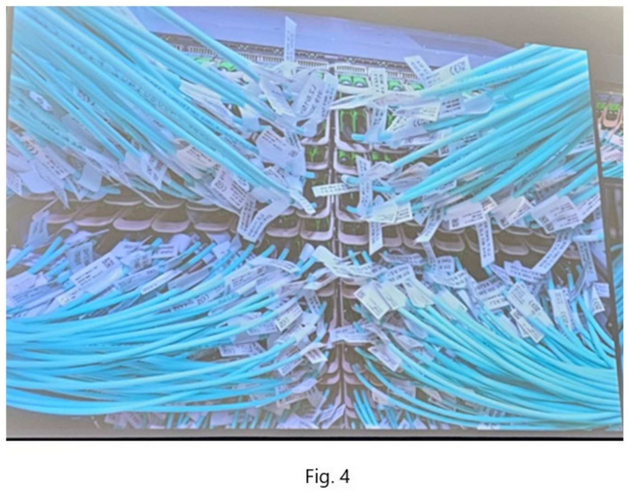

In practice, the complexity of the network deployment and a lack of expertise among the installation workforce can lead to installation errors. Using cable labels that include numerous details such as cluster/pod number, node number, port number, switch number, and switch port number on the network rack side are needed but are complex to follow, e.g., in Fig. 4. For network installers, working in a difficult environment, usually under schedule pressure, misreading labels and misplacing connections can occur, and due to the high density of connections, these errors often go undetected until later stages of the project.

Installers may try to correct mistakes by removing and reinserting multifiber optical connectors, risking further issues. In a busy environment, with other AI infrastructure being installed, cleanliness may not be prioritized. Without protective caps, -often discarded after initial insertion- repositioning multifiber connectors increases the risk of contamination or damage, potentially causing losses or failures detected only during final testing.

To address these issues, this disclosure proposes high-density connections using MPOs, SN-MTs, or MMC connectivity that incorporate a label and color-coding scheme easy for installers to follow at both the server and network racks/cabinets. Our color-coding system includes up to 16 distinct colors, along with patterns and smaller codes, to uniquely identify all interconnection types within the AI network.

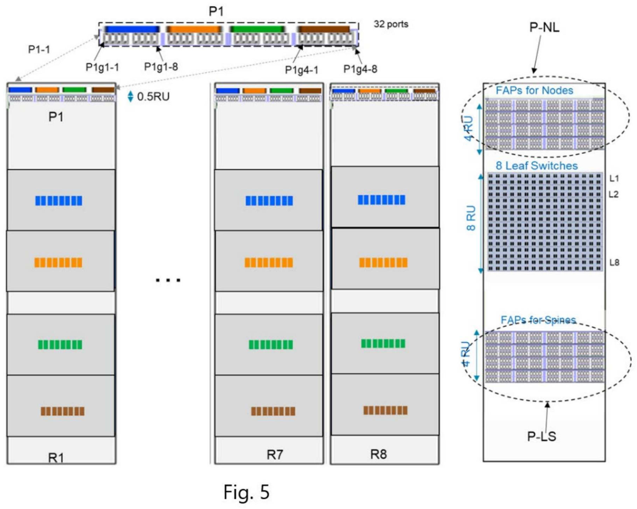

Fig. 5 provides an example based on the AI network from Fig. 3. In this example, there are eight computer racks or cabinets for the node servers, labeled from R1 to R8, and one network cabinet. Here, patch panels, cables, and trunks use a factory-implemented color and label scheme to simplify deployment. Each of the four nodes in a rack is connected using optical fiber patch cords with color labels on each end: blue for Node 1 (N1), orange for Node 2 (N2), green for Node 3 (N3), and brown for Node 4 (N4). The patch cables could have MPOs on one end for Node transceivers and smaller connectors like MMC or SN-MT on the other end for patch panels, P1, P2, P3 and P8. These color labeled patch cords are length tailored for all connections for the cluster/pod.

The patch panels (P1, P2, ... P8) in each rack have 32 multifiber ports compatible with the corresponding patch cord connectors, such as MPO, MMC, or SN-MPO. Each panel is divided into Nn groups of ports, where Nn represents the number of nodes per rack. In the example, Nn=4, with each group comprising of Nnp=8 MPO ports assigned a specific color: blue for the first group (P1g1), orange for the second (P1g2), and brown for the last group, as shown in Fig. 5.

The trunks that connect to the back of the patch panels in each rack are divided into Nn=4 subunits, each with Nnp=8 groups of 8 or more fibers, labeled with a specific color at both ends of the cable. For example, blue for the first subunit, orange for the second, and brown for the last. Trunks use connectors that match their respective patch panel ports, such as MMC, SN-MT, or MPO. In addition to the color, an identifier indicating the node and rack numbers can be added to uniquely identify each trunk within the POD. Note that 'back' and 'front' are relative to how the patch cords and trunks connect and how the device is installed. NVIDIA nodes have transceiver cages at the back, while switches have them at the front.

Fig. 5 also shows the network rack or cabinet, that have 8 leaf switches and two patching zones. The patching zone at the top of the cabinet, P-NL, is used to connect the node servers to the Leaf switches. The patching zone at the bottom, P-LS, is used to connect the Leaf switches to the Spines. In this exemplary embodiment, there are 32 multifiber connectors per row, and two rows per RU in both panels P-NL and P-LS.

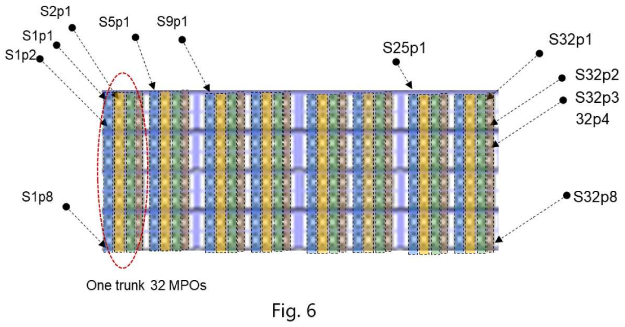

As shown in Fig. 5, the trunks connect in the patching zones of each rack (P1 to P8) to a patch panel at the top of the leaf rack (P-NL). Each trunk, with Ns=4 subunits (4 colors), each consisting of Nsp=8 multifiber connectors. These connectors are transposed when connected to the back of P-NL; for example, blue horizontal connectors at the node racks connect vertically on the P-NL. This pattern repeats for the orange, green, and brown subunits. The trunks are installed consecutively, creating the color pattern shown in Fig. 6.

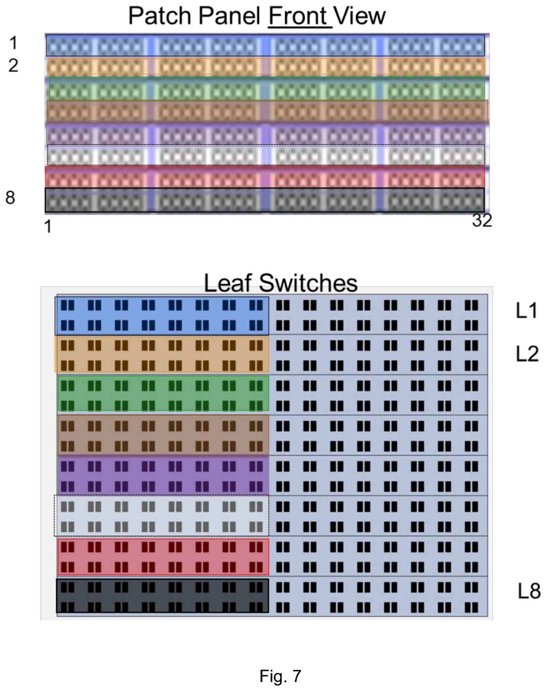

The front ports of P-NL follow a simple pattern to connect to the leaf switches on the same rack. Each horizontal row of P-NL connects to one of the 8 leaf switches, with each switch assigned a unique color. Only half of the ports are populated, with the rest connecting to spines. Colored labels for P-NL rows and switches, along with colored patch cords, simplify the connection process, as shown in Fig. 7.

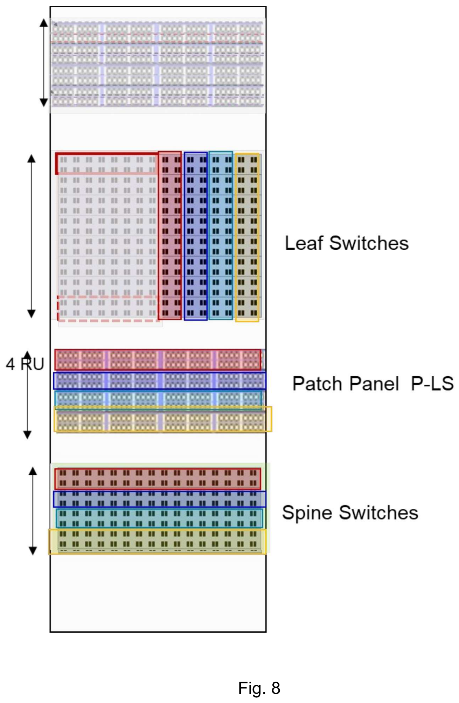

The connections from the Leaf switches to the Spines are made through the P-LS patch panel. For simplicity, Fig. 8 shows the 8 Leaf switches and 4 Spines in the same rack. Patch cords with colored labels at each side, connect the right half of each Leaf's ports to the back of the P-LS. Direct row-to-row connections on the front side of P-LS are connected to the Spine switches. The ends of cables that correspond to the same color can be grouped with tapes or colored organizers as described in following sections.

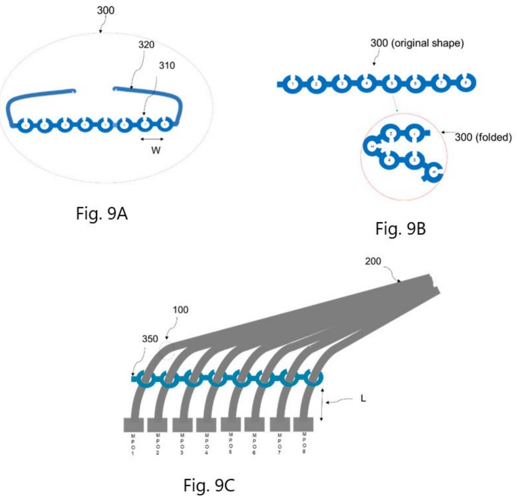

In a preferred embodiment, the groups inside each subunit are grouped using colored tapes or flexible comb-like structures, labeled here **link organizers** that keep the cables in the correct port order as shown in Fig. 9A. Those link organizers can be installed and secured to each trunk unit at the factory or at the field locations. Placing the link organizer at both sides of the cable, at positions close to the MPO connectors, e.g., near the connector boots, maintains the network links' required order. The link organizers using the color scheme as described previously can further facilitate the deployment of topologies such as rail-optimized where the order of the connection is critical. Link organizers have color that represent the all the backend interconnection of each node server. They can use color scheme previously described. Link organizers can be made of flexible material, such as a thermoplastic or an elastomer, allowing the units to conform a quasi-circular shape that can help the cable installation as shown in Fig. 9B.

In Figs. 9B and 9C the link organizer has a small feature at one side of the organizer such as a marker 350 that indicates the spatial sequence of the cable subunits. The first subunit, or the first multifiber connector nearest to the marker corresponds to the first port of the node. The adjacent multifiber connector corresponds to the second port, and so on, with the last multifiber connector, farthest from the marker, corresponding to the final port of the node. For example, in Fig. 9C, which shows a blue the link organizer designed to hold up to 8 MPOs, MPO #1 is the one inserted closest to the marker, while MPO #8 is farthest.

Using the disclosed color scheme and link organizers, the solution maintains group order without extra labels and allow to have concise, readable labels for additional network details.

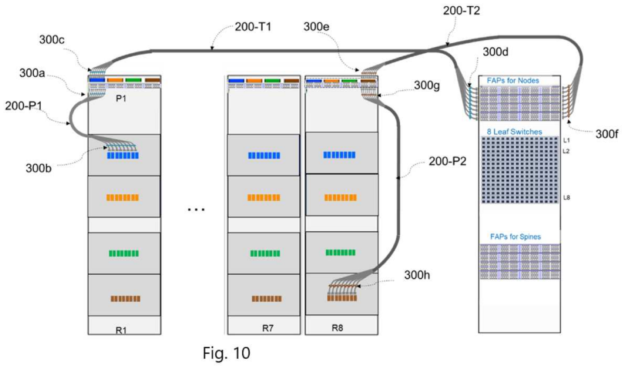

Fig. 10 shows an example of the implementation using the disclosed color scheme with link organizers. In this figure, the ports of node 1 (blue) located at R1 connect to the blue ports of P1 using patch cables 200-P1. Both ends of the patch cables grouped using with link organizers 300a and 300b as shown in the figure.

A trunk cable, 200-T1, with a blue link organizer, 300c, connects to the blue section of patching zone P1 (connections at the back of P1). The interconnection cable with multifiber connectors attaches to P1, following the order already set by the link organizer. The other end of the same trunk cable has a blue link organizer, 300d, that connects to patching zone P-NL. Similarly, patch cords 200-P2 connect the ports of the last server in the cluster/pod, node 32 at R8, to the four groups of adapters (brown) of P8. Another trunk, 200-T2, connects the back of P8g4 to P-NL.

As shown in the figure, simply rotating the link organizer 90 degrees results in the desired rail-optimized topology, greatly reducing the probability of connector misplacement.

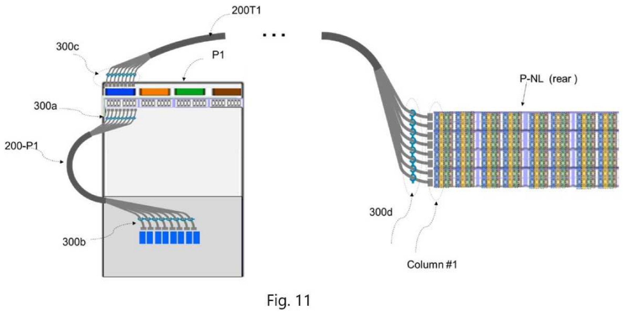

Fig. 11 shows the blue subunits of 200-T1, demonstrating that the transposing needed to implement the rail-optimized topology is achieved by installing the link organizer horizontally at P1g1 and vertically (first column) at the back of P-NL. A similar method is used for the other colors in the same rack. The blue group of the second rack, P2g1, will connect to the fifth column, as seen in the repetitive pattern at the back of P-NL.

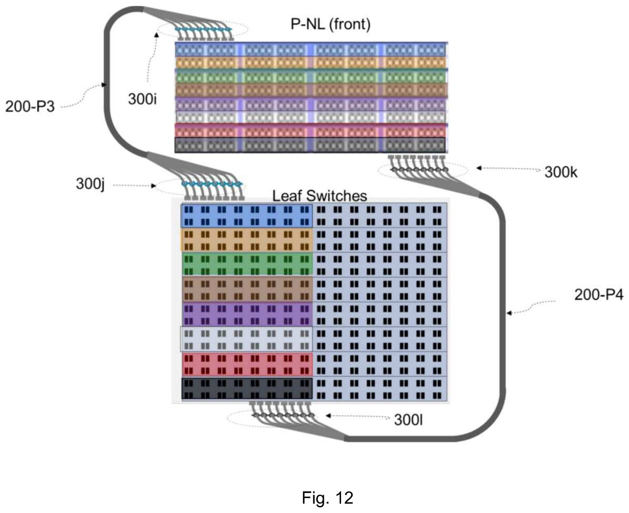

Fig. 12 shows the connectivity from the front of the patch panel P-NL to the Leaf switching ports using the link organizers. In this case, there is no transposition of the link organizers. The first and last eight ports of the Leaf switch-link organizers 300i, 300j, 300k, and 3001, on patch cords 200-P3 and 200-P4-maintain the horizontal orientation.

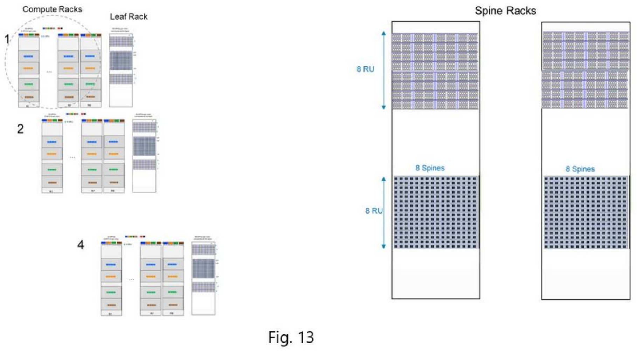

The previously disclosed method, with or without organizers, scales easily for larger networks, requiring changes only at the Leaf to Spine connections. Fig. 13 illustrates a fourfold network expansion, where the connections from each POD's node ports to the Leaves remain identical to the original setup.

As the number of PODs increases, additional Spine switches are required to support the extra Leaf ports. The scaling is straightforward: each POD requires four Spines, so four PODs will need 16 Spine switches.

In Fig. 13, the 16 Spines are distributed across two racks. To deploy this larger network, a minor modification is needed at each Leaf racks, specifically in the connections of the Leaf switches to the front of the P-LS panels which now require 8-colored groups.

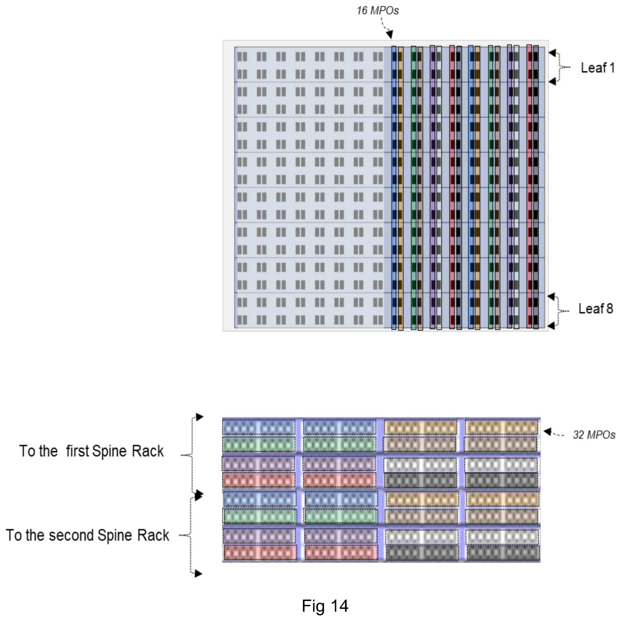

Fig. 14 shows the color scheme used to organize the patch cords connecting the Leaf Switch ports to the patching zone, P-LS. Previously shown link organizers, 300, can be used to simplify deployment. Each colored column across the leaf switches consists of 16 vertical MPOs, and the color pattern repeats twice, as connections must be made to two Spine racks. To connect to P-LS, the columns are transposed into rows for each color, as depicted in the figure. The horizontal pattern in P-LS also repeats twice, with the first pattern connecting to the first Spine rack and the second to the second Spine rack.

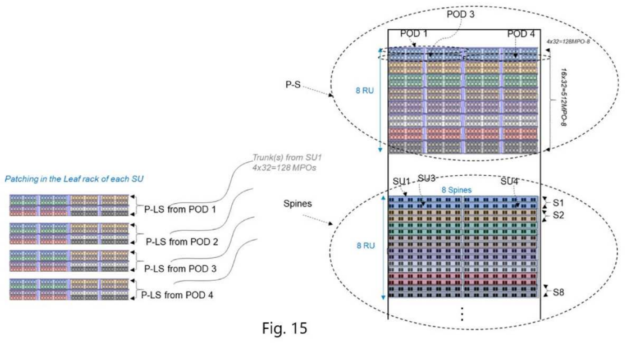

Fig. 15 shows a Spine rack with 8 Spines and a P-S patch panel at the top. The back of P-S connects to incoming trunks from four Leaf racks. The figure also displays the color pattern of the P-LS from 4 PODs, which should match the P-LS pattern shown in Fig. 14.

The back connections at the P-S of each Spine rack require grouping subunits of the same color from different PODs. For example, in Fig. 15, the four blue subunits from four PODs are grouped and connected to the back of the first two rows of P-S. A similar method is applied to the other colors, resulting in the colored pattern on the back of P-S shown in Fig. 15. Finally, patch cords from the front of P-S are directly connected to Spine ports, with cords grouped and color-coded at both ends to minimize deployment errors.

Building on the previous examples, preferred embodiments with link organizers can be used here as well, further simplifying the installation process and reducing the risk of errors.

We have disclosed novel methods and network elements, including patch cables, trunks, and patching components like FAPs or cassettes, all pre-configured with a color scheme at the factory based on customer network requirements. These color maps and codes are linked to network topologies as well as physical properties of the components such as cable lengths, fiber or connector types, and performance tests, simplifying network management and pricing. Our disclosed methods and apparatus are designed to facilitate the deployment of customer networks, enhancing installation reliability and future scaling.

While exemplary embodiments are described above, it is not intended that these embodiments describe all possible forms of the invention defined in the appended claims. Rather, the words used in the specification are words of description rather than limitation, and it is understood that various changes may be made without departing from the scope of the invention. Additionally, the features of various implementing embodiments may be combined to form further embodiments.

## Claims

1. A structured cabling system comprising:
a plurality of leaf switch ports;
a plurality of server node ports; and
a plurality of patch cords, trunk cables and patching components configured to follow a coherent color and labeling scheme to implement optical communication network topologies wherein each port of the plurality of server node ports is grouped and assigned to a color depending on a node order or location on the rack, and further wherein a trail observed at a patch panel for the plurality of leaf switch ports follows a uniform vertical color pattern, the vertical pattern matching a desired logical network topology, and wherein the vertical pattern is easy to observe so a risk of misplacing during the installation is reduced.

2. The structured cabling system of claim 1, wherein a colored link organizer groups and maintain subunits or groups of the cables, in a specific order to enable fast transposition and simpler deployment.

3. The structured cabling system of any preceding claim, wherein the system can be used to scale optical networks from four to thousands of switches.

4. The structured cabling system of any preceding claim, wherein the server node ports are grouped using colored link organizers to keep the order of the connections and facilitate an ordered interconnection transposition needed to implement rail-optimized topologies.

5. The structured cabling system of any preceding claim, wherein the vertical pattern is made easy to observe by means of at least one of distinct colors, patterns, and codes.

6. A structured cabling system comprising:
a first computer rack (R1) for a plurality of node servers comprising:
a first patching zone (P1) having a plurality of sets of color labels, each set having a respective color of a plurality of colors, and
a first node (N1) having color labels having a first color of the plurality of colors,
wherein a first plurality of patch cables (200-P1) connects the first node to a first group (P1g1) of ports of the first patching zone having a set of color labels having the first color;
a network rack comprising:
a first patching panel (P-NL) for connecting the plurality of node servers to a plurality of leaf switches, the first patching panel having a plurality of sets of color labels, each set having a respective color of a plurality of colors,
wherein a first trunk cable (200-T1) connects the first group of ports of the first patching zone to a first group (S1) of ports of the first patching panel having a set of color labels having the first color.

7. The structured cabling system of claim 6, wherein the first group of ports of the first patching panel is transposed with respect to the first group (P1g1) of ports of the first patching zone.

8. The structured cabling system of any of claims 6 to 7, wherein at least one end (300a, 300b, 300c, 300d) of at least one of:
the first plurality of patch cables; or
the first trunk cable
comprises link organizers (300) having the first color.

9. The structured cabling system of any of claims 6 to 8, further comprising:
a second computer rack (R8) for a plurality of node servers comprising:
a second patching zone (P8) having a plurality of sets of color labels, each set having a respective color of the plurality of colors, and
a second node (N4) having color labels having a second color of the plurality of colors,
wherein a second plurality of patch cables (200-P2) connects the second node to a first group of ports of the second patching zone having a set of color labels having the second color;
wherein a second trunk cable (200-T2) connects the first group of ports of the second patching zone to a second group (S32) of ports of the first patching panel having a set of color labels having the second color.

10. A structured cabling system comprising:
a network rack comprising at least one of:
a plurality of leaf switches (L1, ..., L8) having respective first sets of color labels, each first set having a respective color of a plurality of colors, and
a first patching panel (P-NL) for connecting a plurality of node servers to the plurality of leaf switches, the first patching panel having a first, optionally rear, side and a second, optionally front, side having a plurality of sets of color labels, each set having a respective color of the plurality of colors,
wherein the first side of the first patching panel is configured to receive trunk cables (200-P1, 200P2) from one or more patching zones (R1, ..., R8) of respective one or more computer racks (R1, ..., R8) for the plurality of node servers,
wherein a first patch cord (200-P3) connects a first group of ports of the second side of the first patching panel having a set of color labels having a first color to a first group of ports of the leaf switches having a first set of color labels having the first color; or
a or the plurality of leaf switches (L1, ..., L8) having respective second sets of color labels, each second set having a respective color of the plurality of colors, and
a second patching panel (P-LS) for connecting the plurality of leaf switches to a plurality of spine switches (S1, ..., S8), the second patching panel having a plurality of sets of color labels, each set having a respective color of the plurality of colors,
wherein a second patch cord connects a second group of ports of the leaf switches having a second set of color labels having a first color to a first group of ports of the second patching panel having a set of color labels having the first color.

11. The structured cabling system of claim 10, wherein the first group of ports of the second patching panel is transposed with respect to the second group of ports of the leaf switches.

12. The structured cabling system of any of claims 10 to **11,** wherein at least one end (300i, 300j) of at least one of:
the first patch cord; or
the second patch cord;
comprises link organizers (300) having the first color.

13. The structured cabling system of any of claims 6 to 9, wherein the network rack is the network rack of any of claims 10 to 12.

14. The structured cabling system of any of claims 6 to 13, wherein the colors of the color labels/sets of labels depend on a location of the labels/sets of labels within the structured cabling system.

15. The structured cabling system of any of claims 6 to 13, wherein a 'color' comprises at least one of:
one or more colors;
one or more patterns; or
one or more codes,
suitable for uniquely identifying interconnections.
